# EUROPÄISCHE PATENTSCHRIFT

(11) **EP 2 219 853 B1**
(45) Veröffentlichungstag und Bekanntmachung des Hinweises auf die Patenterteilung: **18.04.2012**
(21) Anmeldenummer: 08865705.1
(22) Anmeldetag: 17.11.2008
(51) Int. Cl.: B29C 70/44, B29C 70/54

(54) **Verfahren zur Versteifung eines Faserverbundbauteils sowie Vakuummatte und Anordnung zur Herstellung eines versteiften Faserverbundbauteils**
Method for reinforcing a fiber composite component and vacuum mat and arrangement for the production of a reinforced fiber composite component
Procédé de renforcement d'un élément composite à fibres ainsi que tapis de vide et dispositif de fabrication d'un élément composite à fibres renforcé

(30) Priorität: 20.12.2007 DE 102007061431; 20.12.2007 US 8401 P
(43) Veröffentlichungstag der Anmeldung: 25.08.2010
(73) Patentinhaber: Airbus Operations GmbH, 21129 Hamburg (DE)
(72) Erfinder: LUEBBERING, Christian, 21720 Gruenendeich (DE); LENGSFELD, Hauke, 21717 Helmste (DE); BRANDENBURG, Roland, 21255 Tostedt (DE)
(74) Vertreter: Peckmann, Ralf
(86) Internationale Anmeldenummer: PCT/EP2008/065699
(87) Internationale Veröffentlichungsnummer: WO 2009/080410

(56) Entgegenhaltungen:
- DE-A1- 3 145 698
- US-A- 5 217 669
- US-A- 5 716 488
- US-B1- 6 551 091

## Beschreibung

Die vorliegende Erfindung bezieht sich auf ein Verfahren zur Versteifung eines Faserverbundbauteils, insbesondere für die Luft- und Raumfahrt, sowie auf eine Vakuummatte und auf eine Anordnung zur Herstellung eines derartigen versteiften Faserverbundbauteils.

Obwohl auf beliebige Faserverbundbauteile anwendbar, werden die vorliegende Erfindung sowie die ihr zugrunde liegende Problematik nachfolgend mit Bezug auf flächige, stringerversteifte Kohlefaserkunststoff (CFK)-Bauteile (auch als Faserverbundbauteile bezeichnet), beispielsweise Hautschalen eines Flugzeugs, näher erläutert.

Es ist allgemein bekannt, CFK-Hautschalen mit CFK-Stringern zu versteifen, um den hohen Belastungen im Flugzeugbereich bei möglichst geringem zusätzlichen Gewicht standzuhalten. Dabei werden unterschiedliche Stringertypen verwendet, zum Beispiel T-, Q- oder I-Stringer.

Der Querschnitt von T-Stringern setzt sich aus der Basis und dem Steg zusammen. Die Basis bildet die Verbindungsfläche zur Hautschale. Die Verwendung von mit Stringern, beispielsweise T-Stringer, versteiften Hautschalen ist im Flugzeugbau weit verbreitet. Insbesondere bei Vakuuminfusionsverfahren zum Einbringen einer Matrix, beispielsweise eines Epoxidharzes, in Faserhalbzeuge. Infusionsverfahren können gegenüber anderen bekannten Verfahren zur Herstellung von Faserverbundbauteilen, wie beispielsweise dem Prepreg-Verfahren, kostengünstig sein, weil dies die Verwendung von kostengünstigeren Faserhalbzeugen erlaubt.

Unter Faserhalbzeugen sind Gewebe, Gelege und Fasermatten zu verstehen. Diese werden mit einer Matrix, beispielsweise einem Epoxidharz, versehen und anschließend beispielsweise in einem Autoklav ausgehärtet.

Beim Vakuuminfusionsverfahren werden derzeit zum Aufbau von so genannten Vakuumsäcken drapierfähige Einweg-Polyamidfolien eingesetzt. Der Einpackprozess eines Bauteils erfolgt vollständig manuell, was insbesondere bei Versteifungselementen, wie zum Beispiel den oben erwähnten Stringern, zu hohen Zeitaufwänden führt, da die Vakuumfolie konturgetreu über diese Versteifungselemente geführt werden muss, um einen Verzug des Bauteils zu vermeiden. Die Vakuumfolie muss außerdem zur Erzielung einer Dichtheit gegenüber der Atmosphäre abgedichtet werden, was durch Applizieren von entsprechenden Dichtbändern - ebenfalls manuell - erfolgt. Aufgrund der manuellen Prozessführung ist die Reproduzierbarkeit mit großen Unsicherheiten behaftet, so dass zum Beispiel für die Positionierung von Versteifungselementen auf einem Faserverbundbauteil große Toleranzen notwendig sind, die zu einer Gewichtserhöhung des Bauteils führen können. Fehlerhafte Vakuumaufbauten können bis hin zu einem Ausschuss des Bauteils führen.

Die Einwegfolie kann für sich alleine nur mit vorgehärteten T-Versteifungselementen oder auch anderen verwendet werden. Ungehärtete T-Versteifungselemente oder auch andere erfordern eine zusätzliche Stütze innerhalb oder außerhalb des Vakuumaufbaus. Zudem müssen nasse Stringer, das heißt ungehärtete Stringer, in dieser Fertigungstechnik nach Härten auf ihr jeweiliges Nennmaß abgefräst werden. Nach dem Härten ist ein hoher manueller Aufwand erforderlich, um die Einwegfolie und das Dichtband wieder zu entfernen.

Die US 5,217,669 beschreibt ein Verfahren zum Herstellen einer flexiblen Kompositform, insbesondere zur Kompositherstellung, und die mittels diesem Verfahren erzeugte Kompositform. Das Verfahren beinhaltet das Lösen eines B-stufigen Fluoroelastomers in einem geeigneten Lösungsmittel wie Methylethylketon oder Toluol, um eine Fluoroelastomerlösung zu erzeugen. Ein Gewebe wird anschließend mit der Fluoroelastomerlösung beschichtet. Das Lösungsmittel verdunstet und das imprägnierte Gewebe wird zwischen unverstärkte Schichten eingebracht, um ein verstärktes Formmaterial zu erzeugen. Das erzeugte Formmaterial wird mit abwechselnden Schichten von unverstärktem Fluoroelastomer belegt und dann ausgehärtet, um eine Kompositform zu erzeugen, welche stabil genug ist, um eine Vielzahl an Temperaturzyklen zu überdauern. Zusätzlich kann eine Elastomerform zur Verfügung gestellt werden mit Detailkavitäten, welche zur Aufnahme von Detailstrukturen ausgebildet sind, wobei jede Kavität eine Extraverstärkung beinhaltet, um die Details ohne umfangreiche Handpositionierung und ohne den Gebrauch von Klebemitteln in engen Toleranzen zu halten. Die Form wird zur Herstellung von Kompositbauteilen verwendet und ist wiederverwendbar.

Die DE 31 45 698 beschreibt eine Vorrichtung zum Fertigen von Bauteilen aus faserverstärkten Werkstoffen, zum Beispiel Glasfaserlaminaten oder Bauteilen aus anderen Werkstoffen, die unter Vakuum verklebt, ausgehärtet und mittels ähnlichen Fertigungsverfahren mit Druck beaufschlagt werden. Die Vorrichtung umfasst eine Pressform mit einem dem zu fertigenden Bauteil angepassten Formkörper. Auf dem Formkörper wird der faserverstärkte Werkstoff für das Bauteil aufgelegt. Über diese Anordnung wird eine in der Form an das Bauteil angepasste Membran, zum Beispiel aus Silikon-Kautschuk, gestülpt. Die Membran überlappt den faserverstärkten Werkstoff für das Bauteil. In diesem Randbereich ist die Membran mit einem umlaufenden Dichtprofil versehen, das in einen entsprechend geformten Profilsitz innerhalb der Pressform eingreift. Hierdurch wird der Raum zwischen Membran, Pressform und faserverstärktem Werkstoff nach außen gasdicht abgeschlossen. Über einen Vakuumanschluss der Membran kann dann in diesem Raum ein Unterdruck erzeugt werden, durch den Werkstoff für das Bauteil gepresst wird. Zur Verbesserung des gasdichten Sitzes der Membran im Bereich der Dichtlippe kann ein weiterer Vakuumanschluss vorgesehen werden, über den in dem Hohlraum zwischen Dichtlippe und dem Boden des Profilsitzes ein Unterdruck erzeugt wird, durch den die Dichtlippe fest in den Profilsitz gesaugt wird.

Vor diesem Hintergrund liegt der vorliegenden Erfindung die Aufgabe zugrunde, ein Verfahren zur Versteifung eines Faserverbundbauteils sowie eine Vakuummatte und eine Anordnung zur Herstellung eines versteiften Faserverbundbauteils bereitzustellen, um die oben genannten Nachteile zu beheben bzw. erheblich zu reduzieren.

Erfindungsgemäß wird diese Aufgabe durch eine Vakuummatte mit den Merkmalen des Patentanspruchs 1, durch eine Anordnung mit den Merkmalen des Patentanspruchs 10 bzw. durch ein Verfahren mit den Merkmalen des Patentanspruchs 12 gelöst.

Demgemäß wird ein Verfahren zur Versteifung eines Faserverbundbauteils für die Luft- und Raumfahrt bereitgestellt, bei welchem eine Vakuummatte mit mindestens einem Aufnahmeabschnitt zur reproduzierbaren Aufnahme mindestens eines Versteifungselementes ausgebildet wird. In diesen Aufnahmeabschnitt der Vakuummatte wird das mindestens eine Versteifungselement eingebracht. Danach erfolgt ein reproduzierbares Aufbringen der Vakuummatte mit mindestens einem eingebrachten Versteifungselement auf dem zu versteifenden Faserverbundbauteil in abgedichteter Weise zum Bilden eines Formabschnitts, der dann zum Anbinden des mindestens einen Versteifungselementes an dem Faserverbundbauteil ausgehärtet wird. Anschließend wird die Vakuummatte von dem versteiften Faserverbundbauteil entfernt und zum Wiederverwenden bereitgestellt.

Ferner wird eine Vakuummatte zur Herstellung eines versteiften Faserverbundbauteils für die Luft- Raumfahrt bereitgestellt. Sie weist mindestens einen Aufnahmeabschnitt n zur Aufnahme mindestens eines Versteifungselementes auf. Ein selbstabdichtender Dichtabschnitt ist an ihr zur Abdichtung der Vakuummatte gegenüber der Atmosphäre bei Anlage an einer zugeordneten Anlagefläche umfänglich angeordnet. Weiterhin weist die Vakuummatte mindestens einen Angriffsabschnitt zum Zusammenwirken mit einer zugeordneten Vakuummatten-Transporteinrichtung auf.

Weiterhin wird eine Anordnung zur Herstellung eines versteiften Faserverbundbauteils für die Luft- und Raumfahrt bereitgestellt. Auf einer Grundplatte wird das zu versteifenden Faserverbundbauteil getragen. Zur Anordnung gehört weiterhin eine Vakuummatte, welche mindestens einen Aufnahmeabschnitt (6) zur Aufnahme mindestens eines Versteifungselementes (4) aufweist. Sie ist mit mindestens einem eingebrachten Versteifungselement mittels einer Vakuummatten-Transporteinrichtung in eine vorbestimmte Position relativ zu dem zu versteifenden Faserverbundbauteil transportierbar. Die Grundplatte und die Vakuummatten-Transporteinrichtung weisen zueinander korrespondierende Zentriermittel für eine reproduzierbare Positionierung der Vakuummatte relativ zu dem zu versteifenden Faserverbundbauteil auf. Ferner weisen die Grundplatte und die Vakuummatte zueinander korrespondierende Abdichtmittel für eine umlaufende Abdichtung der Vakuummatte gegenüber der Atmosphäre auf.

Somit weist die vorliegende Erfindung gegenüber den eingangs genannten Ansätzen den Vorteil auf, dass ein Zeitaufwand erheblich verringert wird, da ein Großteil der manuellen Arbeiten entfällt. Weiterhin wird eine erhöhte Reproduzierbarkeit und Positioniergenauigkeit erreicht, welche ein Ausschussrisiko und eine Fehlerwahrscheinlichkeit vermindert. Die Vakuummatte ist wieder verwendbar und verkleinert einen Materialbedarf.

In den Unteransprüchen finden sich vorteilhafte Ausgestaltungen und Verbesserungen der vorliegenden Erfindung.

Eine Grundidee der Erfindung besteht darin, einen wieder verwendbaren Silikonvakuumsack in Form einer Vakuummatte zu benutzen. Diese ist mit zumindest einem Aufnahmeabschnitt mit einer Ausnehmung mittels eines Formbauteils zur Formgebung der geometrischen Abmessungen des aufzunehmenden Versteifungselementes hergestellt. Damit wird eine bereits vorgeformte "Tasche" geschaffen, in welche harte (vor- oder ausgehärtete) oder weiche (ungehärtete) Versteifungselemente, zum Beispiel T-Stringer eingelegt und zusammen mit der Vakuummatte auf dem zu versteifenden Faserverbundbauteil reproduzierbar positioniert werden können. Durch die konturgenaue Ausbildung der "Taschen", das heißt der Ausnehmungen für die Versteifungselemente in der Vakuummatte ist es möglich, so genannte "Net-Shape"-Stringer zu fertigen, die ein Befräsen des Bauteils nach dem Aushärten überflüssig machen

Die Vakuummatte wird mit den darin eingelegten Versteifungen mittels einer Vakuummatten-Transporteinrichtung transportiert, wobei geeignete Greifer der Transporteinrichtung mit korrespondierenden Angreifabschnitten der Vakuummatte zusammenwirken, um ein einfaches und leichtes Aufnehmen und Absetzen der Vakuummatte zu gewährleisten. Die Angreifabschnitte sind bevorzugt an den Aufnahmeabschnitten der Vakuummatte angeordnet und können Bauelemente aufweisen, die eine Zusammenwirkung mit den Greifern auf mechanische, pneumatische und/oder elektromagnetische Weise ermöglichen.

Eine Zusammenwirkung mit Vakuumgreifern wird beispielsweise durch eine bestimmte Steifigkeit des Angreifabschnitts erzielt. Für eine mechanische zusammenwirkung kann der Angreifabschnitt beispielsweise mit zu Zapfen der Greifer korrespondierenden Aufnahmen versehen sein. Für eine elektromagnetische Zusammenwirkung sind zum Beispiel magnetisierbare Abschnitte in den Aufnahmeabschnitten vorhanden, die von elektromagnetischen Greifern in einfacher Weise durch Ein- und Ausschalten der elektromagnetischen Greifer ergriffen und losgelassen werden können um ein schnelles Aufheben und Absetzen zu ermöglichen.

Die Vakuummatten-Transporteinrichtung wirkt außerdem mit geeigneten zentriermitteln einer Grundplatte zusammen, auf welcher das zu versteifende Faserverbundbauteil aufgebracht ist und über welches die Vakuummatte aufgelegt wird. Die Zentriermittel können zum Beispiel als Zentrierstifte und Zentrierbohrungen am Rand der Grundplatte ausgeführt sein. Damit wird eine immer gleiche, das heißt reproduzierbare Positionierung der Vakuummatte und somit der Versteifungselemente auf dem Faserverbundbauteil erreicht. Ist die Vakuummatte in Position gebracht, was zum Beispiel über Endschalter in den Zentriermitteln einer Steuereinrichtung gemeldet werden kann, so werden die Greifer geöffnet und die Vakuummatten-Transporteinrichtung zur Seite gefahren, was zum Beispiel über einen Kran oder einen geeigneten Schienenaufbau erfolgen kann.

Die Vakuummatte besitzt einen umfänglich angeordneten, selbstabdichtenden Dichtabschnitt zur Abdichtung der Vakuummatte gegenüber der Atmosphäre bei Anlage an einer zugeordneten Anlagefläche. Der Dichtabschnitt kann bevorzugt einen V-Nutkeil aufweisen, wobei eine einfache Selbstabdichtung erfolgen kann.

Beim Entfernen der Vakuummatte von dem Faserverbundbauteil nach einem Aushärten wenigstens des gebildeten Formabschnitts zum Anbinden des mindestens einen Versteifungselementes an dem Faserverbundbauteil kann ein Beaufschlagen der Vakuummatte mit Luft oder einem Gas erfolgen. Dazu sind bevorzugt verschließbare Luftzuführungseinrichtungen an der Vakuummatte angeordnet, durch welche die Luft oder das Gas zwischen die Vakuummatte und ihrer Auflage eingeblasen wird. Dadurch ist ein Ablösen der Vakuummatte vorteilhaft erleichtert.

Weiterhin ist es vorteilhaft, dass die zumindest eine Ausnehmung mit zumindest einem Einschnitt in Verlängerung ihrer Längsrichtung zum Entformen versehen wird, da beim Entformen beim Einblasen der Luft oder des Gases sich der Einschnitt aufweitet und ein Aufklaffen der Ausnehmung zur Lösung von dem in ihm angeordneten Versteifungselement erleichtert, wodurch eine Fehlerwahrscheinlichkeit verringert wird.

Die Vakuummatte eignet sich sowohl für T-, als auch für Q- oder I-Stringer. Sie ist auch auf U-Stringerprofile anwendbar, wobei allerdings der Positioniervorgang der Stringerelemente auf dem Faserverbundbauteil entfällt, da U-Profile zumeist einen Teil des Basislaminats des Faserverbundbauteils darstellen und aus je zwei U-Schenkeln ein T-Profil geformt wird.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Querschnittsansicht eines Formabschnitts eines Faserverbundbauteils mit einem ersten Ausführungsbeispiel einer erfindungsgemäßen Vakuummatte mit einem Aufnahmeabschnitt;
- Fig. 2: eine Querschnittsansicht des Aufnahmeabschnitts längs Linie A-A nach Fig. 1;
- Fig. 3: eine perspektivische Draufsicht auf ein beispielhaftes Faserverbundbauteil mit Formabschnitten mit einem zweiten Ausführungsbeispiel der erfindungsgemäßen Vakuummatte;
- Fig. 4: eine schematische Querschnittsansicht dreier Formabschnitte des Faserverbundbauteils mit dem zweiten Ausführungsbeispiel der erfindungsgemäßen Vakuummatte nach Fig. 3;
- Fig. 5: eine schematische Querschnittsansicht des Aufnahmeabschnitts des ersten oder zweiten Ausführungsbeispiels der erfindungsgemäßen Vakuummatte mit einem ersten Ausführungsbeispiel einer Vakuummatten-Transporteinrichtung;
- Fig. 6: eine schematische Querschnittsansicht eines Aufnahmeabschnitts eines dritten Ausführungsbeispiels der erfindungsgemäßen Vakuummatte mit einem zweiten Ausführungsbeispiel der Vakuummatten-Transporteinrichtung;
- Fig. 7: eine schematische Querschnittsansicht eines Aufnahmeabschnitts eines vierten Ausführungsbeispiels der erfindungsgemäßen Vakuummatte mit einem dritten Ausführungsbeispiel der Vakuummatten-Transporteinrichtung;
- Fig. 8: eine schematische, vergrößerte Darstellung eines in Fig. 7 mit einem Oval gekennzeichneten Halteabschnitts; und
- Fig. 9: eine schematische Querschnittsansicht einer beispielhaften erfindungsgemäßen Anordnung zur Herstellung eines versteiften Faserverbundbauteils.

In den Figuren bezeichnen dieselben Bezugszeichen gleiche oder funktionsgleiche Komponenten, soweit nichts Gegenteiliges angegeben ist.

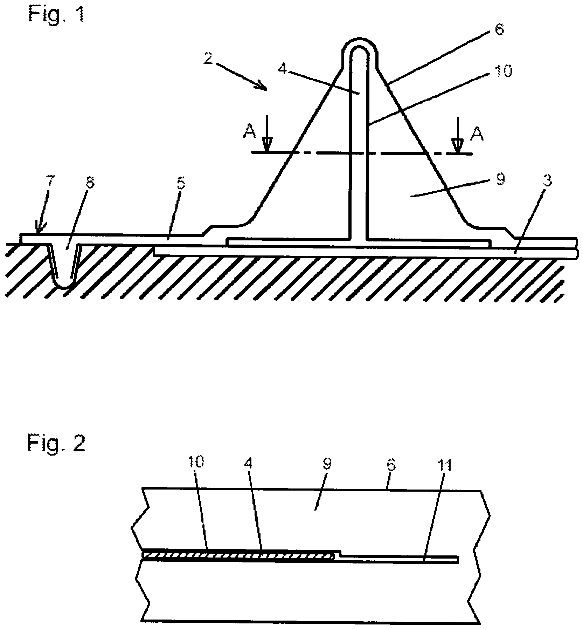

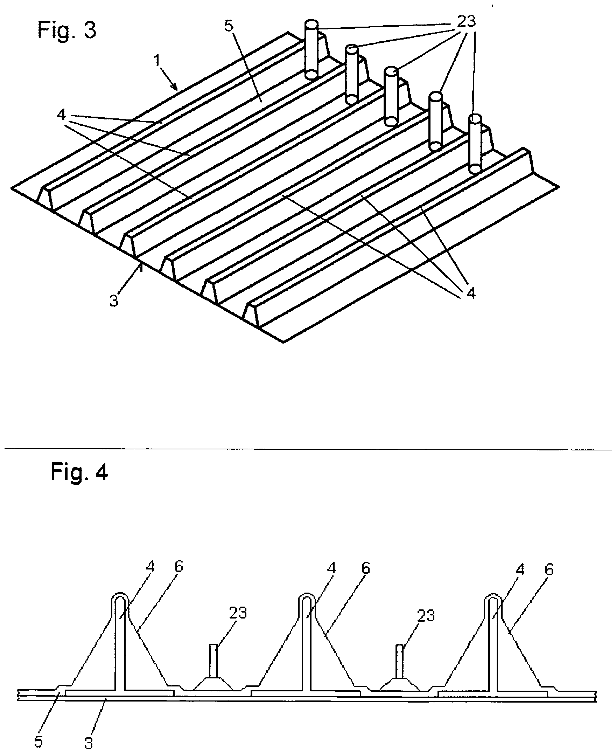

In Fig. 1 ist eine schematische Querschnittsansicht eines Formabschnitts 2 eines Faserverbundbauteilabschnitts 3 eines Faserverbundbauteils 1 (siehe Fig. 3) mit einem ersten Ausführungsbeispiel einer erfindungsgemäßen Vakuummatte 5 mit einem Aufnahmeabschnitt 6 dargestellt.

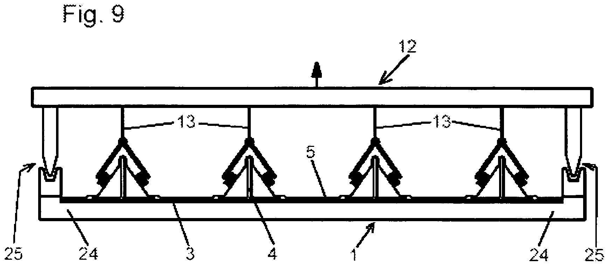

Der Faserverbundbauteilabschnitt 3 ist hier auf einer Grundplatte 24 einer Herstellungsanordnung (siehe Fig. 9), die weiter unten noch ausführlicher beschrieben wird, angeordnet und ist in dem gezeigten Formabschnitt 2 durch ein Versteifungselement 4, hier ein T-Stringer, zur Versteifung mittels eines Vakuuminfusionsverfahrens vorgesehen.

Das Versteifungselement 4 wurde hierzu vorher an einem anderen Ort in eine für das Versteifungselement 4 kompatible Ausnehmung 10 des Aufnahmeabschnitts 6 der Vakuummatte 5 eingesetzt und wird von dieser vollständig umgeben. Die Vakuummatte 5 ist hier aus Silikon hergestellt. In dem Aufnahmeabschnitt 6 umgibt der Silikonwerkstoff als ein Aufnahmekörper 9 das Versteifungselement 4. Das Versteifungselement 4 kann vor dem Aushärten des Faserverbundbauteils 1 ungehärtet, also weich, vorgehärtet oder gehärtet sein. Es wird durch den Aufnahmekörper 9 gestützt.

Aufgrund der Materialbeschaffenheit der Vakuummatte 5 (Silikon, sehr weich und biegsam) muss diese mittels einer geeigneten Vakuummatten-Transportvorrichtung 12, die unten noch im Detail erläutert wird, dann mit dem eingesetzten Versteifungselement 4 auf den durch das Versteifungselement 4 zu versteifenden Faserverbundbauteilabschnitt 3 aufgebracht werden, so dass der untere Abschnitt des Versteifungselementes 4 direkt auf dem Faserverbundbauteilabschnitt 3 aufliegt. Der Faserverbundbauteilabschnitt 3 und das Versteifungselement 4 werden dabei von der Vakuummatte 5 überdeckt, welche den Aufbau mittels eines umfänglich am Rand der Vakuummatte angeordneten selbstdichtenden Dichtabschnitts 7 gegenüber der Atmosphäre abdichtet. Der Dichtabschnitt 7 weist in diesem Beispiel einen V-Nutkeil 8 auf, welcher hier in einer zu ihm korrespondierenden Nut in der Grundplatte 24 zusammenwirkt.

Die Ausnehmung 10 des Aufnahmeabschnitts 6 der Vakuummatte 5 wird als eine vorgeformte "Tasche" bei der Herstellung der Vakuummatte mittels eines Dummybauteils ausgebildet. Dabei ist das Dummybauteil eine Nachbildung des Versteifungselementes 4 in Originalgröße, wodurch alle geometrischen Eigenheiten des später in der Ausnehmung 10 aufgenommenen Versteifungsbauteils 4 abgebildet werden.

Die Ausnehmung 10 ist in ihrer Längsrichtung mit einem Einschnitt 11 verlängert, wie aus Fig. 2 ersichtlich ist, welche eine Querschnittsansicht des Aufnahmeabschnitts 6 längs der Linie A-A aus Fig. 1 ist. Dieser Einschnitt 11 hat den Vorteil, dass nach dem Härten des Formabschnitts 2 ein Entformen der Vakuummatte 5, das heißt beim Abheben dieser von dem dann auf dem Faserverbundbauteilabschnitt 3 angebundenen Versteifungselement 4, erleichtert wird. Dieses wird weiter unten noch ausführlicher beschrieben.

In Fig. 1 ist nur ein Versteifungselement 4 gezeigt und beschrieben, zur Versteifung eines Faserverbundbauteils 1 können aber mehrere Versteifungselement 4 benötigt werden, wie Fig. 3 in einer perspektivischen Draufsicht auf ein beispielhaftes Faserverbundbauteil 1 mit Formabschnitten 2 mit einem zweiten Ausführungsbeispiel der erfindungsgemäßen Vakuummatte 5 zeigt.

In Fig. 3 sind sechs Versteifungselemente 4 auf dem Faserverbundbauteilabschnitt 3 des Faserverbundbauteils 1 angeordnet und von der Vakuummatte 5 überdeckt, die hier für jedes Versteifungselement 4 eine Ausnehmung 10 aufweist. Weiterhin ist die Vakuummatte 5 in diesem zweiten Ausführungsbeispiel mit verschließbaren Luftzuführungseinrichtungen 23 ausgerüstet, durch welche beim Entformen der Vakuummatte 5 Luft oder Gas zwischen die Vakuummatte 5 und den Faserverbundbauteilabschnitt 3 eingeblasen wird, um das Entformen zu erleichtern. Dabei werden die Einschnitte, die in Fig. 2 gezeigt sind, durch die eingeblasene Luft aufgeweitet und ermöglichen so ein leichteres Lösen des Aufnahmekörpers 9 von dem jeweiligen Versteifungselement 4.

In Fig. 4 ist eine schematische Querschnittsansicht dreier Formabschnitte 2 des Faserverbundbauteils 1 mit dem zweiten Ausführungsbeispiel der erfindungsgemäßen Vakuummatte 5 nach Fig. 3 dargestellt, wobei die verschließbaren Luftzuführungseinrichtungen 23 in Form von Rohrstutzen ausgebildet sind. Eine Verschließbarkeit kann durch Ventile (nicht dargestellt) manuelle, pneumatisch oder elektrisch/elektromagnetisch erfolgen. Diese Luftzuführungseinrichtungen 23 können auch zu Aufbringungen eines zur Vakuuminfusion benötigten Vakuums dienen.

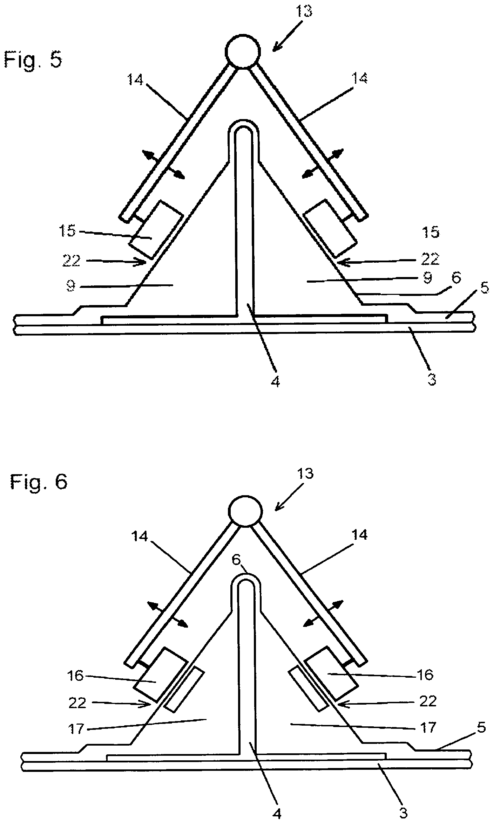

Wie oben erwähnt, wird die Vakuummatte 5 mittels einer Vakuummatten-Transportvorrichtung 12 transportiert. Dazu weist die Vakuummatten-Transportvorrichtung 12 Greifer 13 zur Handhabung der Vakuummatte 5 auf. Eine erste Ausführung eines Greifers 13 ist in Fig. 5 schematisch dargestellt. In diesem Beispiel ist der Greifer 13 mit zwei Greiferarmen 14 ausgestattet, deren obere Enden in einem Gelenk scherenförmig in Pfeilrichtung hin- und her verschwenkbar gekoppelt sind. Ihre unteren Enden sind mit Vakuumgreifelementen 15 versehen, die mit der Außenseite des Aufnahmekörpers 9 des hier gezeigten Aufnahmeabschnitts 6 der Vakuummatte 5 zusammenwirken. Dazu weist der Aufnahmeabschnitt 6 hier versteifte Angriffsabschnitte 22 für die Vakuumgreifelemente 15 auf. Die Greiferarme 14 sind zum Beispiel durch einen nicht dargestellten pneumatischen oder elektromotorischen Antrieb o. dgl. Verschwenkbar. Zum Anheben der Vakuummatte 5 verschwenken sie in Richtung auf den Aufnahmeabschnitt 6, saugen diesen an und transportieren die Vakuummatte 5 an vorbestimmte Positionen.

Fig. 6 zeigt ähnlich zu Fig. 5 eine schematische Querschnittsansicht eines Aufnahmeabschnitts 6 eines dritten Ausführungsbeispiels der erfindungsgemäßen Vakuummatte 5 mit einem zweiten Ausführungsbeispiel der Vakuummatten-Transporteinrichtung 12, die elektromagnetische Greifelemente 16 aufweist, welche mit magnetisierbaren Bauteilen 17 in den Angriffsabschnitten 22 im Aufnahmekörper 9 des Aufnahmeabschnitts 6 der Vakuummatte 5 zusammenwirken. Die Funktion ist leicht vorstellbar.

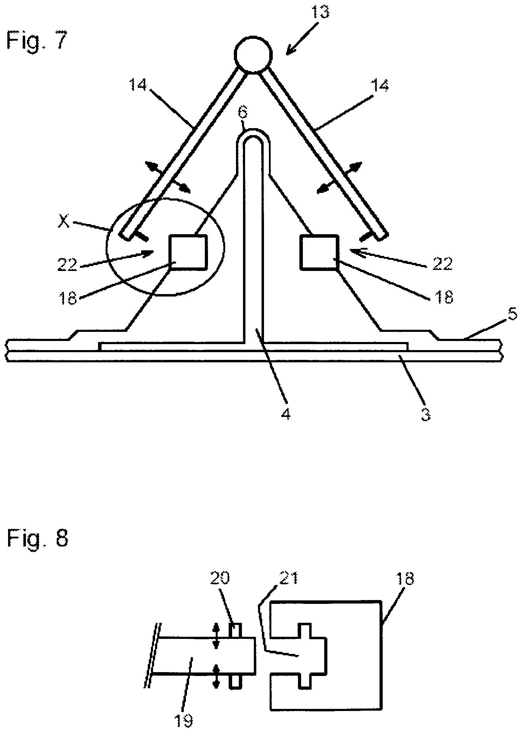

Eine weitere, mechanische Greiferausführung zeigt Fig. 7 ähnlich zu Fig. 5 und 6 in einer schematischen Querschnittsansicht eines Aufnahmeabschnitts 6 eines vierten Ausführungsbeispiels der erfindungsgemäßen Vakuummatte 5 mit einem dritten Ausführungsbeispiel der Vakuummatten-Transporteinrichtung 12. Die unteren Enden der Greifarme 14 sind mit mechanischen Greifelementen 19 mit einem hier rechteckigen Körper (zum Beispiel ein Quader) bestückt, welche in ihrer Längsrichtung (Pfeile) verstellbare Zapfen 20 aufweisen, wie Fig. 8 in einer vergrößerten schematischen Darstellung des in Fig. 7 durch ein Oval markierten Bereiches illustriert. Die mechanischen Greifelemente 19 werden zum Ergreifen der Vakuummatte 5 in Aufnahmen 21 von Eingriffselementen 18 in den Angriffsabschnitten 22 an den Aufnahmeabschnitten 6 der Vakuummatte 5 eingeführt, wobei die verstellbaren zapfen 20 eingezogen sind. Wenn die rechteckigen Körper 19 vollständig in der jeweiligen Aufnahme 21 aufgenommen sind, werden die Zapfen 20 in korrespondierende Ausnehmungen zur Verriegelung ausgefahren. Die Verstellung der Zapfen 20 kann zum Beispiel elektromotorisch, elektromagnetisch oder pneumatisch erfolgen. Die Zapfen 20 können zum Beispiel gegen einen Federdruck pneumatisch eingezogen werden und beim Erreichen ihrer Ausnehmungen durch den Federdruck darin einrasten. Weitere mechanische Greifeinrichtungen sind selbstverständlich möglich. Auch Kombinationen der hier gezeigten Beispiele sind denkbar.

Fig. 9 zeigt eine schematische Querschnittsansicht einer beispielhaften erfindungsgemäßen Anordnung zur Herstellung eines versteiften Faserverbundbauteils 1 mit der oben erwähnten Vakuummatten-Transporteinrichtung 12.

Die Vakuummatten-Transporteinrichtung 12 kann zum Beispiel modular aufgebaut sein, so dass sie leicht an Faserverbundbauteile 1 mit unterschiedlichen Abmessungen anpassbar ist, wobei zum Beispiel die gleichen Greifereinrichtungen 13 Verwendung finden können. Aber auch Kombinationen sind denkbar.

In dem dargestellten Beispiel ist das auf der Grundplatte 24 aufliegende Faserverbundbauteil 1 mit vier Versteifungselemente 4 zu versteifen, die zuvor wie oben beschrieben in den jeweiligen Ausnehmungen 10 der Vakuummatte 5 aufgenommen sind. Diese Bestückung kann zum Beispiel in einem separaten Raum oder auch neben der Grundplatte 24 vorgenommen werden. Die Vakuummatten-Transportvorrichtung 12 ergreift die mit den Versteifungselementen 4 bestückte Vakuummatte 5 mit den Greifereinrichtungen wie oben angegeben und transportiert sie auf die hier in Fig. 9 dargestellte Grundplatte 24. Dies kann auf unterschiedliche Weise je nach Gegebenheit erfolgen, zum Beispiel mittels einer Kraneinrichtung oder mit einem Schienensystem.

Zur reproduzierbaren Positionierung besitzen hier die Grundplatte 24 und die Vakuummatten-Transporteinrichtung 12 am Rand dieser Bauteilvorrichtung Zentriermittel 25, zum Beispiel Zentrierstifte an der Vakuummatten-Transporteinrichtung 12 und korrespondierende Aufnahmen an der Grundplatte 24.

Ist die Vakuummatte 5 zentriert, positioniert und abgedichtet abgelegt, so werden die Greifereinrichtungen 13 wie oben beschrieben geöffnet und die Vakuummatten-Transportvorrichtung 12 zur Seite gefahren. Die Abdichtung erfolgt hier wie oben beschrieben durch eine selbstabdichtende V-Nutkeildichtung. Das Faserverbundbauteil 1 kann nun gehärtet werden. Danach wird die Vakuummatten-Transportvorrichtung 12 wieder über der Vakuummatte 5 positioniert und hebt diese wie oben beschrieben ab.

Die Anordnung kann eine Steuereinrichtung aufweisen, welche mit den Zentriermitteln 25, Antriebsmitteln zum Verfahren der Vakuummatten-Transportvorrichtung 12, Antriebsmitteln für die Greifeinrichtungen 13 und weiteren Melde- und Sensoreinrichtungen verbunden ist. Dadurch wird die Herstellung des versteiften Faserverbundbauteils 1 so automatisiert, dass eine hohe Reproduzierbarkeit bei geringster Fehlerwahrscheinlichkeit erzielt wird, wobei die Vakuummatte 5 wieder verwendbar ist.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können nicht nur T-Stringer sondern auch Versteifungselemente mit anderen Profilen, wie zum Beispiel Q- und/oder I-Stringer, und auch U-Stringer mit der Erfindung be- und verarbeitet werden, wobei bei den U-Stringerprofilen besondere Positioniervorgänge angewendet werden.

Die Vakuummatte 5 kann nicht nur für die Stringer, das heißt für die Versteifungselemente 4, sondern auch zusätzlich für so genannte Stringerhalteprofile verwendet werden. Somit ist eine große Vielseitigkeit bei vorteilhafter Wiederverwendbarkeit gegeben.

Bei einem Verfahren zur Versteifung eines Faserverbundbauteils 1 für die Luft- und Raumfahrt, wird eine Vakuummatte 5 mit mindestens einem Aufnahmeabschnitt 6 zur reproduzierbaren Aufnahme mindestens eines Versteifungselementes 4 ausgebildet. Das mindestens eine Versteifungselement wird 4 in den mindestens einen Aufnahmeabschnitt 6 der Vakuummatte 5 eingebracht. Reproduzierbar wird die Vakuummatte 5 mit mindestens einem eingebrachten Versteifungselement 4 auf dem zu versteifenden Faserverbundbauteil 1 in abgedichteter Weise zum Bilden eines Formabschnitts 2 aufgebracht und wenigstens der gebildete Formabschnitts 2 wird zum Anbinden des mindestens einen Versteifungselementes 4 an dem Faserverbundbauteil 1 ausgehärtet. Anschließend erfolgt ein Entfernen der Vakuummatte 5 von dem versteiften Faserverbundbauteil 1 und Bereitstellen zum Wiederverwenden der Vakuummatte 5. Eine entsprechende Vakuummatte 5 und eine Anordnung zur Herstellung eines entsprechenden versteiften Faserverbundbauteils 1.

### Bezugszeichenliste

- 1: Faserverbundbauteil
- 2: Formabschnitt
- 3: Faserverbundbauteilabschnitt
- 4: Versteifungselement
- 5: Vakuummatte
- 6: Aufnahmeabschnitt
- 7: Dichtabschnitt
- 8: V-Nutkeil
- 9: Aufnahmekörper
- 10: Ausnehmung
- 11: Einschnitt
- 12: Vakuummatten-Transporteinrichtung
- 13: Greifereinrichtung
- 14: Greiferarm
- 15: Vakuumgreifelement
- 16: Elektromagnetisches Greifelement
- 17: Magnetisierbares Bauteil
- 18: Eingriffselement
- 19: Mechanisches Greifelement
- 20: Zapfen
- 21: Aufnahme
- 22: Angriffsabschnitt
- 23: Luftzuführungseinrichtung
- 24: Grundplatte
- 25: Zentriermittel

## Patentansprüche

1. Vakuummatte (5) zur Herstellung eines versteiften Faserverbundbauteils (1) für die Luft- und Raumfahrt, mit:
mindestens einem Aufnahmeabschnitt (6) zur Aufnahme mindestens eines Versteifungselementes (4), wobei der mindestens eine Aufnahmeabschnitt (6) eine Ausnehmung (10) zur Aufnahme des Versteifungselementes (4) und zumindest einen mit der Ausnehmung (10) verbundenen Einschnitt (11) zur Entformung aufweist;
einem umfänglich angeordneten, selbstabdichtenden Dichtabschnitt (7) zur Abdichtung der Vakuummatte (5) gegenüber der Atmosphäre bei Anlage an einer zugeordneten Anlagefläche; und
mindestens einem Angriffsabschnitt (22) zum Zusammenwirken mit einer zugeordneten Vakuummatten-Transporteinrichtung (12).

2. Vakuummatte (5) nach Anspruch 1,
**dadurch gekennzeichnet,**
**dass** die Ausnehmung (10) mit zumindest einem Einschnitt (11) in Verlängerung ihrer Längsrichtung zur Entformung versehen ist.

3. Vakuummatte (5) nach Anspruch 1 oder 2,
**dadurch gekennzeichnet,**
**dass** der Dichtabschnitt (7) in Gestalt eines V-Nutkeils (8) ausgebildet ist.

4. Vakuummatte (5) nach wenigstens einem der vorhergehenden Ansprüche,
**dadurch gekennzeichnet,**
**dass** die Vakuummatte (5) mit zumindest einer verschließbaren Luftzuführungseinrichtung (23) versehen ist.

5. Vakuummatte (5) nach wenigstens einem der vorhergehenden Ansprüche,
**dadurch gekennzeichnet,**
**dass** der mindestens eine Angriffsabschnitt (22) an dem mindestens einen Aufnahmeabschnitt (6) angeordnet ist.

6. Vakuummatte (5) nach wenigstens einem der vorhergehenden Ansprüche,
**dadurch gekennzeichnet,**
**dass** der mindestens eine Angriffsabschnitt (22) zum Zusammenwirken mit einem Vakuumgreifer (13, 14, 15) der Vakuummatten-Transporteinrichtung (12) mit einer korrespondierenden Steifigkeit ausgebildet ist.

7. Vakuummatte (5) nach wenigstens einem der vorhergehenden Ansprüche,
**dadurch gekennzeichnet,**
**dass** der mindestens eine Angriffsabschnitt (22) zum Zusammenwirken mit einem magnetischen und/oder elektromagnetischen Greifer (13, 14, 16) der Vakuummatten-Transporteinrichtung (12) mit einem korrespondierenden magnetisierbaren Bauteil (17) ausgebildet ist.

8. Vakuummatte (5) nach wenigstens einem der vorhergehenden Ansprüche,
**dadurch gekennzeichnet,**
**dass** der mindestens eine Angriffsabschnitt (22) zum Zusammenwirken mit einem mechanischen Greifer (13, 14, 19) der Vakuummatten-Transporteinrichtung (12) mit einem korrespondierenden Eingriffselement (18) ausgebildet ist.

9. Vakuummatte (5) nach wenigstens einem der vorhergehenden Ansprüche,
**dadurch gekennzeichnet,**
**dass** die Vakuummatte (5) als ein wieder verwendbarer Silikonvakuumsack ausgebildet ist.

10. Anordnung zur Herstellung eines versteiften Faserverbundbauteils (1) für die Luft- und Raumfahrt, mit:
einer Grundplatte (24) zum Tragen des zu versteifenden Faserverbundbauteils (1);
einer Vakuummatte (5); und
einer Vakuummatten-Transporteinrichtung (12) mit mindestens einer Greifereinrichtung (13) zum Zusammenwirken mit korrespondierenden Angriffsabschnitten (22) an der Vakuummatte (5) für einen Transport der Vakuummatte (5) mit mindestens einem eingebrachten Versteifungselement (4) in eine vorbestimmte Position relativ zu dem zu versteifenden Fäserverbundbauteil (1) ;
wobei die Grundplatte (24) und die Vakuummatten-Transporteinrichtung (12) zueinander korrespondierende Zentriermittel (25) für eine reproduzierbare Positionierung der Vakuummatte (5) relativ zu dem zu versteifenden Faserverbundbauteil (1) und wobei die Grundplatte (24) und die Vakuummatte (5) zueinander korrespondierende Abdichtmittel für eine umlaufende Abdichtung der Vakuummatte (5) gegenüber der Atmosphäre aufweisen,
wobei die Vakuummatte (5) nach zumindest einem der vorhergehenden Ansprüche ausgebildet ist.

11. Anordnung nach Anspruch 10,
**dadurch gekennzeichnet,**
**dass** die Anordnung zur Erfassung der reproduzierbar abgelegten Vakuummatte (5) Meldeeinrichtungen aufweist, die mit einer zugehörigen Steuereinrichtung zur Steuerung der Vakuummatten-Transporteinrichtung (12) gekoppelt ist.

12. Verfahren zur Versteifung eines Faserverbundbauteils (1) für die Luft- und Raumfahrt, mit folgenden Verfahrensschritten:
Ausbilden einer Vakuummatte (5) nach zumindest einem der Ansprüche 1 bis 9 zur reproduzierbaren Aufnahme mindestens eines Versteifungselementes (4);
Einbringen des mindestens einen Versteifungselementes (4) in den mindestens einen Aufnahmeabschnitt (6) der Vakuummatte (5);
reproduzierbares Aufbringen der Vakuummatte (5) mit dem mindestens einen eingebrachten Versteifungselement (4) mittels einer Vakuummatten-Transporteinrichtung (12) einer Anordnung nach einem der Ansprüche 9 oder 10 auf dem zu versteifenden Faserverbundbauteil (1) der Anordnung nach einem der Ansprüche 9 oder 10 in abgedichteter weise zum Bilden eines Formabschnitts (2);
Aushärten des gebildeten Formabschnitts (2) zum Anbinden des mindestens einen Versteifungselementes (4) an dem Faserverbundbauteil (1); und
Entfernen der Vakuummatte (5) von dem versteiften Faserverbundbauteil (1) mittels der Vakuummatten-Transporteinrichtung (12).

13. Verfahren nach Anspruch 12,
**dadurch gekennzeichnet,**
**dass** beim Entfernen der Vakuummatte (5) von dem Faserverbundbauteil (1) die Vakuummatte (5) mit Luft oder einem Gas beaufschlagt wird.

14. Verfahren nach Anspruch 12 oder 13,
**dadurch gekennzeichnet,**
**dass** das mindestens eine Versteifungselement (4) in einem ungehärteten, vorgehärteten oder ausgehärteten Zustand in den Aufnahmeabschnitt (6) eingebracht wird.

## Claims

1. A vacuum mat (5) for the production of a reinforced fibre composite component (1) for aerospace applications, having:
- at least one receiving portion (6) for accommodating at least one reinforcing element (4), the at least one receiving portion (6) comprising a recess (10) for accommodating the reinforcing element (4) and at least one incision (11) connected to the recess (10) for demoulding purposes;
- a circumferentially arranged, self-sealing sealing portion (7) for sealing the vacuum mat (5) relative to the atmosphere when it is placed on an associated contact surface; and
- at least one application portion (22) for interaction with an associated vacuum mat conveying means (12).

2. A vacuum mat (5) according to claim 1, **characterised in that** the recess (10) is provided for demoulding purposes with at least one incision (11) in extension of the longitudinal direction thereof.

3. A vacuum mat (5) according to claim 1 or claim 2, **characterised in that** the sealing portion (7) is configured as a V-slot wedge (8).

4. A vacuum mat (5) according to at least one of the preceding claims, **characterised in that** the vacuum mat (5) is provided with at least one closable air supply means (23).

5. A vacuum mat (5) according to at least one of the preceding claims, **characterised in that** the at least one application portion (22) is arranged on the at least one receiving portion (6).

6. A vacuum mat (5) according to at least one of the preceding claims, **characterised in that** the at least one application portion (22) is provided with appropriate rigidity to interact with a vacuum gripper (13, 14, 15) of the vacuum mat conveying means (12).

7. A vacuum mat (5) according to at least one of the preceding claims, **characterised in that** the at least one application portion (22) is provided with a corresponding magnetisable component (17) for interacting with a magnetic and/or electromagnetic gripper (13, 14, 16) of the vacuum mat conveying means (12).

8. A vacuum mat (5) according to at least one of the preceding claims, **characterised in that** the at least one application portion (22) is provided with a corresponding engaging element (18) for interacting with a mechanical gripper (13, 14, 19) of the vacuum mat conveying means (12).

9. A vacuum mat (5) according to at least one of the preceding claims, **characterised in that** the vacuum mat (5) takes the form of a re-usable silicone vacuum bag.

10. An arrangement for the production of a reinforced fibre composite component (1) for aerospace applications, having:
- a base plate (24) for supporting the fibre composite component (1) to be reinforced;
- a vacuum mat (5); and
- a vacuum mat conveying means (12) with at least one gripper means (13) for interacting with corresponding application portions (22) on the vacuum mat (5) for conveying the vacuum mat (5) with at least one reinforcing element (4) introduced therein into a predetermined position relative to the fibre composite component (1) to be reinforced;
wherein the base plate (24) and the vacuum mat conveying means (12) comprise mutually corresponding centring means (25) for reproducible positioning of the vacuum mat (5) relative to the fibre composite component (1) to be reinforced and wherein the base plate (24) and the vacuum mat (5) comprise mutually corresponding sealing means for peripheral sealing of the vacuum mat (5) relative to the atmosphere,
wherein the vacuum mat (5) is configured according to at least one of the preceding claims.

11. An arrangement according to claim 10, **characterised in that** the arrangement for detecting the reproducibly deposited vacuum mat (5) comprises signalling means, which are coupled to an associated control device for controlling the vacuum mat conveying means (12).

12. A method of reinforcing a fibre composite component (1) for aerospace applications, having the following method steps:
- constructing a vacuum mat (5) according to at least one of claims 1 to 9 for reproducible accommodation of at least one reinforcing element (4);
- introducing the at least one reinforcing element (4) into the at least one receiving portion (6) of the vacuum mat (5);
- reproducible application of the vacuum mat (5) with the at least one reinforcing element (4) introduced therein by means of a vacuum mat conveying means (12) of an arrangement according to either one of claims 9 or 10 onto the fibre composite component (1) to be reinforced of the arrangement according to either one of claims 9 or 10 in sealed manner to form a shaped portion (2);
- curing the shaped portion (2) formed to connect the at least one reinforcing element (4) to the fibre composite component (1); and
- removing the vacuum mat (5) from the reinforced fibre composite component (1) by means of the vacuum mat conveying means (12).

13. A method according to claim 12, **characterised in that** on removal of the vacuum mat (5) from the fibre composite component (1) the vacuum mat (5) is supplied with air or a gas.

14. A method according to claim 12 or claim 13, **characterised in that** the at least one reinforcing element (4) is introduced into the receiving portion (6) in an uncured, precured or fully cured state.

## Revendications

1. Tapis à dépression (5) pour la fabrication d'un élément composite à fibres renforcé (1) pour l'aéronautique et l'aérospatiale, avec :
- au moins une section de logement (6) destinée au logement d'au moins un élément de renforcement (4), au moins une section de logement (6) présentant pour le démoulage un évidement (10) destiné au logement de l'élément de renforcement (4) et au moins une tranchée (11) reliée à l'évidement (10) ;
- un section étanche auto-étanchéifiante (7) disposée de manière périphérique destinée à colmater le tapis à dépression (5) par rapport à l'atmosphère au niveau d'une surface d'appui associée ; et
- au- moins une partie de préhension (22) prévue pour interagir avec un dispositif de transport à tapis à dépression associé (12).

2. Tapis à dépression (5) selon la revendication 1, **caractérisé par le fait que** l'évidement (10) est doté d'au moins une tranchée (11) dans le prolongement de sa direction longitudinale pour le démoulage.

3. Tapis à dépression (5) selon la revendication 1 ou 2, **caractérisé par le fait que** la section étanche (7) a la forme d'une cale d'encoche en V (8).

4. Tapis à dépression (5) selon au moins une des revendications précédentes, **caractérisé par le fait que** le tapis à dépression (5) est doté d'au moins un dispositif d'alimentation en air (23) obturable.

5. Tapis à dépression (5) selon au moins une des revendications précédentes, **caractérisé par le fait qu'**au moins une partie de préhension (22) est disposée au niveau d'une section de logement (6).

6. Tapis à dépression (5) selon au moins une des revendications précédentes, **caractérisé par le fait qu'**au moins une partie de préhension (22) prévue pour interagir avec un préhenseur à ventouse (13, 14, 15) du dispositif de transport à tapis à dépression (12) est formée avec un renforcement correspondant.

7. Tapis à dépression (5) selon au moins une des revendications précédentes, **caractérisé par le fait qu'**au moins une partie de préhension (22) prévue pour interagir avec un préhenseur magnétique et/ou électromagnétique (13, 14, 16) du dispositif de transport à tapis à dépression (12) est formée avec un élément correspondant pouvant être magnétisé.

8. Tapis à dépression (5) selon au moins une des revendications précédentes, **caractérisé par le fait qu'**au moins une partie de préhension (22) prévue pour interagir avec un préhenseur magnétique (13, 14, 19) du dispositif de transport à tapis à dépression (12) est formée avec un élément d'engagement (18) correspondant.

9. Tapis à dépression (5) selon au moins une des revendications précédentes, **caractérisé par le fait que** le tapis à dépression (5) se présente sous la forme d'un sac de mise au vide en silicone réutilisable.

10. Disposition pour la fabrication d'un élément composite à fibres renforcé (1) pour l'aéronautique et l'aérospatiale, avec :
- une plaque de base (24) destinée au support de l'élément composite à fibres à renforcer (1) ;
- un tapis à dépression (5) ; et
- un dispositif de transport à tapis à dépression (12) avec au moins un dispositif préhenseur (13) prévu pour interagir avec des parties de préhension correspondantes (22) au niveau du tapis à dépression (5) pour un transport du tapis à dépression (5) avec au moins un élément de renforcement (4) inséré dans une position prédéfinie par rapport à l'élément composite à fibres (1) à renforcer ;
la plaque de base (24) et le dispositif de transport à tapis à dépression (12) présentant des moyens de centrage (25) mutuellement correspondants pour un positionnement reproductible du tapis à dépression (5) par rapport à l'élément composite à fibres (1) à renforcer et la plaque de base (24) et le tapis à dépression (5) présentant des moyens d'étanchéité mutuellement correspondants pour une étanchéité périphérique du tapis à dépression (5) par rapport à l'atmosphère,
le tapis à dépression (5) étant formé selon au moins une des revendications précédentes.

11. Dispositif selon la revendication 1, **caractérisé par le fait que** la disposition pour la détection du tapis à dépression (5) déposé de manière reproductible présente des unités de signalisation, qui est couplée avec un dispositif de commande associé destiné à commander le dispositif de transport à tapis à dépression (12).

12. Procédé de renforcement d'un élément composite à fibres (1) pour l'aéronautique et l'aérospatiale, avec les opérations suivantes :
- formation d'un tapis à dépression (5) selon au moins une des revendications 1 à 9 pour le logement reproductible d'au moins un élément de renforcement (4) ;
- insertion d'au moins un élément de renforcement (4) dans au moins une section de logement (6) du tapis à dépression (5) ;
- application reproductible du tapis à dépression (5) avec au moins un élément de renforcement (4) inséré à l'aide d'un dispositif de transport à tapis à dépression (12) d'une disposition selon l'une des revendications 9 ou 10 sur l'élément composite à fibres (1) à renforcer de la disposition selon l'une des revendications 9 ou 10 de manière étanche pour la formation d'une section moulée (2) ;
- durcissement de la section moulée (2) formée pour fixer au moins un élément de renforcement (4) à l'élément composite à fibres (1) ; et
- retrait du tapis à dépression (5) de l'élément composite à fibres renforcé (1) à l'aide du dispositif de transport à tapis à dépression (12).

13. Procédé selon la revendication 12, **caractérisé par le fait que** le tapis à dépression (5) est alimenté en air ou en gaz lors du retrait du tapis à dépression (5) de l'élément composite à fibres (1).

14. Procédé selon la revendication 12 ou 13, **caractérisé par le fait qu'**au moins un élément de renforcement (4) est inséré dans un état non durci, prédurci ou durci dans la section de logement (6).
